# EUROPÄISCHE PATENTSCHRIFT

(11) **EP 0 794 135 B1**
(45) Veröffentlichungstag und Bekanntmachung des Hinweises auf die Patenterteilung: **27.06.2001**
(21) Anmeldenummer: 97890032.2
(22) Anmeldetag: 26.02.1997
(51) Int. Cl.: B65G 1/04

(54) **Beladeeinrichtung**
Loading device
Dispositif de chargement

(30) Priorität: 04.03.1996 AT 40496
(43) Veröffentlichungstag der Anmeldung: 10.09.1997
(73) Patentinhaber: P.E.E.M. Förderanlagen Ges.m.b.H., 8051 Graz (AT)
(72) Erfinder: Neukam, Helmut, Ing., 8071 Hausmannstätten (AT)
(74) Vertreter: Kliment, Peter, Dipl.-Ing.

(56) Entgegenhaltungen:
- EP-A- 0 097 308
- DE-A- 4 225 041
- FR-A- 2 630 412
- FR-A- 2 696 722

## Beschreibung

Die Erfindung bezieht sich auf eine Beladeeinrichtung zum Beschicken einer Warenausgabeeinrichtung gemäß dem Oberbegriff des Anspruches 1. FR 2696722A offenbart eine derartige Beladeeinrichtung.

Bisher wurden die Füllschächte von Warenausgabeeinrichtungen in der Regel von Hand aus beschickt, wobei kleinere Stapel von Warenstücken in die Füllöffnungen der Füllschächte eingeschoben werden. Dabei ergibt sich jedoch der Nachteil eines entsprechend hohen Aufwandes.

Ziel der Erfindung ist es, diesen Nachteil zu vermeiden und eine Beladeeinrichtung vorzuschlagen, die ein einfaches und rasches Befüllen der Füllschächte einer Warenausgabeeinrichtung ermöglicht.

Erfindungsgemäß wird dies durch die kennzeichnenden Merkmale des Anspruches 1 erreicht.

Durch die vorgeschlagenen Maßnahmen ergibt sich der Vorteil, daß die Warenstücke einfach von oben her in das Magazin eingelegt und dieses z.B. über eine Fördereinrichtung der Beladeeinrichtung zugeführt werden kann, die das Magazin durch Verschwenken um zwei im wesentlichen senkrecht zueinander liegenden Achsen in eine an der Füllöffnung eines Füllschachtes anliegende Stellung gebracht und die Warenstücke einfach in den Füllschacht eingeschoben werden können.

Durch die Anordnung eines Niederhalters kann ein oben offenes Magazin verwendet werden, das sich leicht beschicken läßt, wobei die Befüllung der Magazine an einem beliebigen Ort erfolgen kann, der nach ergonometrischen Grundsätzen gestaltet sein kann. Außerdem ist durch den Niederhalter auch gewährleistet, daß das befüllte Magazin sicher gehandhabt werden kann, ohne daß die Gefahr eines Herausfallens einzelner Warenstücke besteht.

Außerdem ergibt sich durch den vorgeschlagenen Aufbau der Beladeeinrichtung ein sehr einfacher Aufbau.

Durch die Merkmale des Anspruches 2 können auf einfache Weise auch relativ hohe Füllschächte sehr einfach gefüllt werden, ohne, daß dazu sehr große und unhandliche Magazine verwendet werden müssen.

Die Merkmale des Anspruches 3 können auch Warenausgabeeinrichtungen mit einer großen Anzahl von nebeneinander angeordneten Füllschächten auf einfache weise beschickt werden.

Durch die Merkmale des Anspruches 4 können sehr einfach gestaltete Magazine verwendet werden, die für Warenstücke verschiedener Größe verwendet werden können. Dabei ist durch die geneigt verlaufende Innenseite des Bodens auf einfache Weise eine definierte Lage des Warenstapels sichergestellt, wodurch die Beladung der Füllschächte erleichtert wird.

Die Erfindung wird nun anhand der Zeichnung näher erläutert. dabei zeigen:
Fig. 1 eine axonometrische Ansicht eines erfindungsgemäßen Magazins,
Fig. 2 eine axonometrische Ansicht eines mit Warenstücken befüllten Magazins,
Fig. 3 und 4 axonometrische Ansichten des Magazins nach den Fig. 1 und 2 von unten,
Fig. 5 schematisch das Magazin beim Ausschieben der eingeschlichteten Warenstücke,
Fig. 6 schematisch eine Stirnansicht einer erfindungsgemäßen Beladeeinrichtung,
Fig. 6a Details der Beladeeinrichtung nach der Fig. 6,

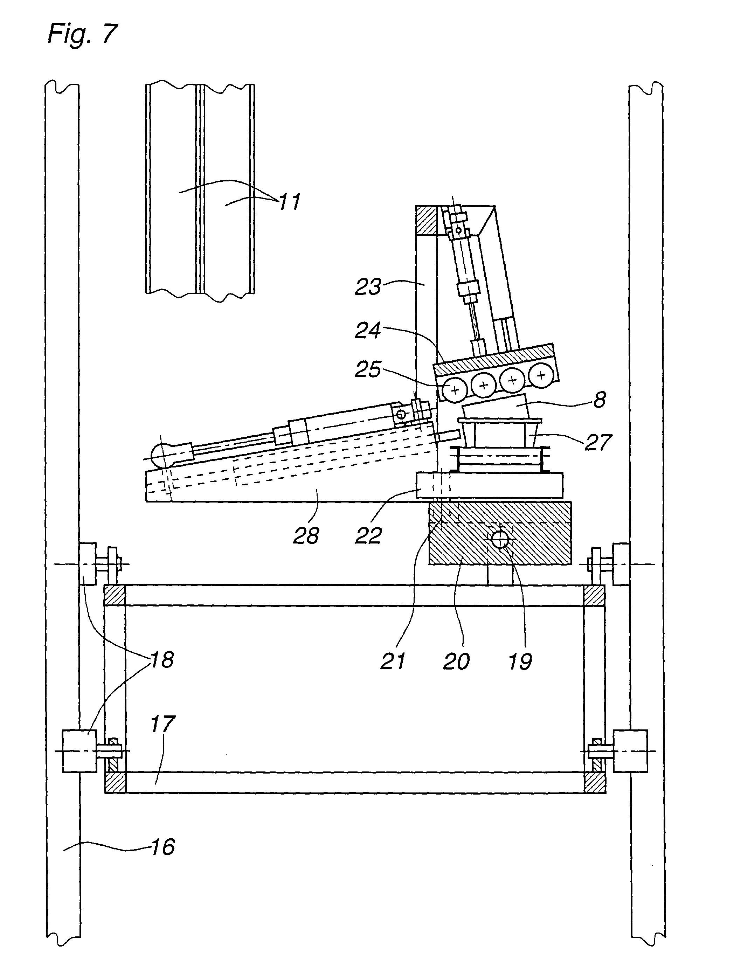

Fig. 7 einen Schnitt gemäß der Linie A-A in der Fig 6A,
Fig. 8 eine Seitenansicht nach der Fig. 7 mit um die erste Drehachse gedrehtem Träger,
Fig. 9 einen Schnitt gemäß der Linie B-B der Fig. 8 mit um die zweite Achse gedrehter Abstützung,
Fig. 10 einen Schnitt gemäß der Linie X-X in der Fig. 9.

Ein erfindungsgemäßes Magazin weist einen Boden 1 mit einer ebenen Unterseite 2 auf, von dem an drei Seiten Seitenwände 3, 4 aufragen, wogegen an der vierten Seite des Bodens eine Seitenwand fehlt. Bei der dargestellten Ausführungsform schließen die Seitenwände 3, 4 mit der Unterseite 2 des Bodens 1 im wesentlichen einen rechten Winkel ein.

Die Seitenwand 4 ist mit einem im wesentlichen rechteckigen Schlitz 5 versehen, der sich über die gesamte Länge der Seitenwand erstreckt.

Parallel zur Seitenwand 4 verlaufen an der Innenseite des Bodens 1 Rippen 6. Dabei steigt die Höhe der Rippen von der Unterseite 2 des Bodens 1 von der Seitenwand 4 bis zur freien Kante des Bodens 1 stetig an.

Von den Seitenwänden 3 stehen Handriffe 7 nach außen ab, die die Handhabung des Magazins erleichtern.

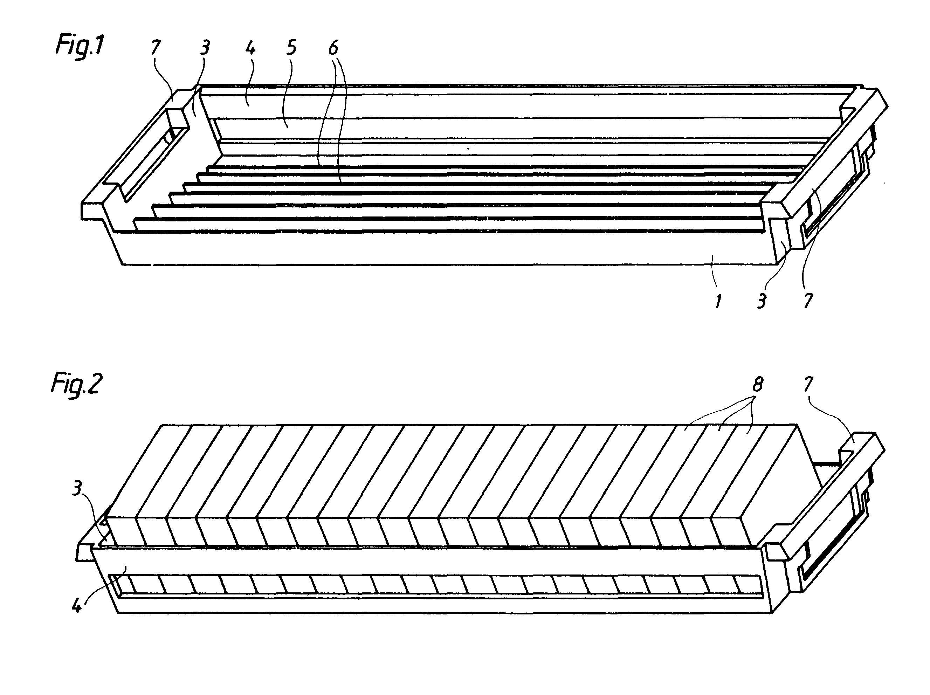

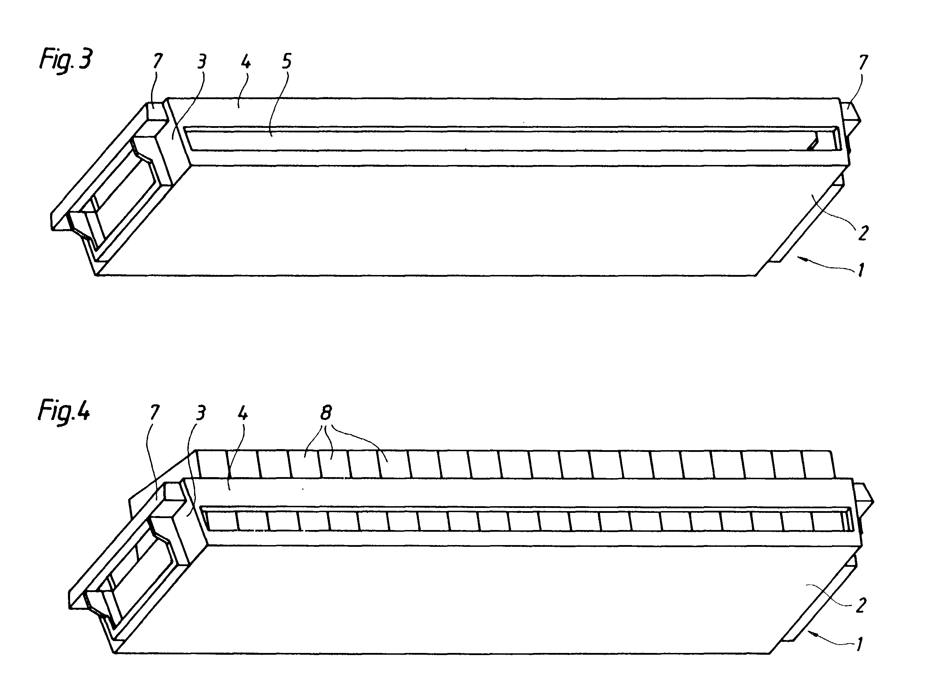

Das Magazin, kann wie aus den Fig. 2 und 4 zu ersehen ist mit Warenstücken 8 beladen werden. Dabei liegen die Warenstücke 8 an der Seitenwand 4 an, die von der tiefsten Stelle der Innenseite des Bodens 1 aufragt. Dabei überragen die Warenstücke 8 die Oberkanten der Seitenwände 3, 4.

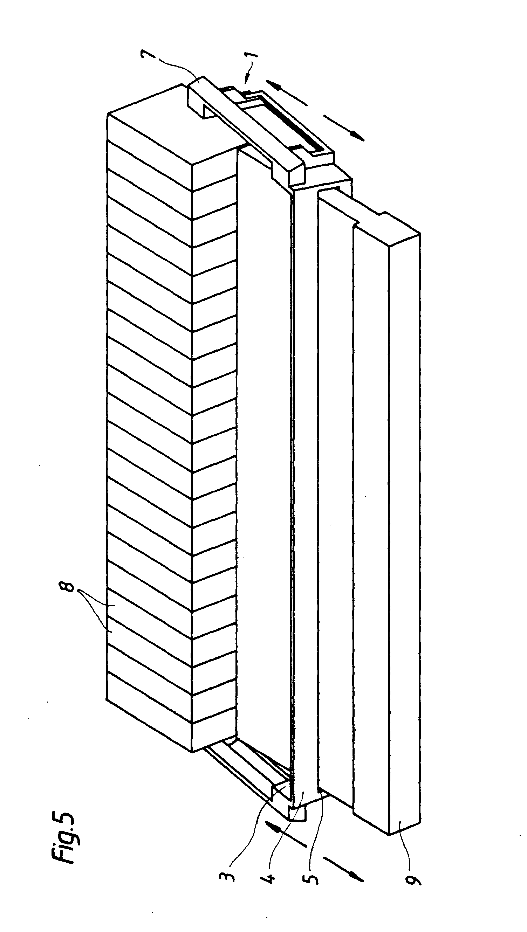

Wie aus der Fig. 5 zu ersehen ist, kann in den Schlitz 5 der Seitenwand 4 ein Ausstoßer 9 eingesteckt und die Warenstücke 8 können im wesentlichen als vollständiges Paket ausgestoßen und dabei in einen Füllschacht einer Warenausgabeeinrichtung eingeschoben werden.

Dabei können die beladenen Magazine über ein Förderband einer Beladeeinrichtung zugeführt werden, die einen Niederhalter aufweist, der von oben auf die Warenstücke 8 drückt um ein Herausfallen zu verhindern. Durch Aufschwenken der Magazine und Anlegen der Magazine an Füllöffnungen von Füllschächten von Warenausgabeeinrichtungen und anschließendes Einschieben eines Ausstoßers können die Warenstücke rasch und einfach in die Füllschächte eingeschoben werden.

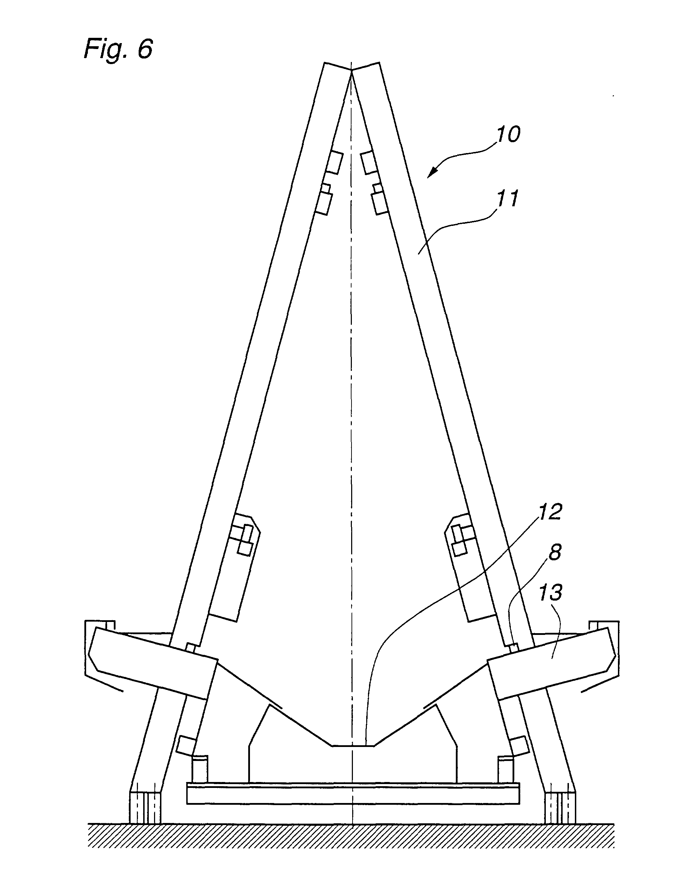

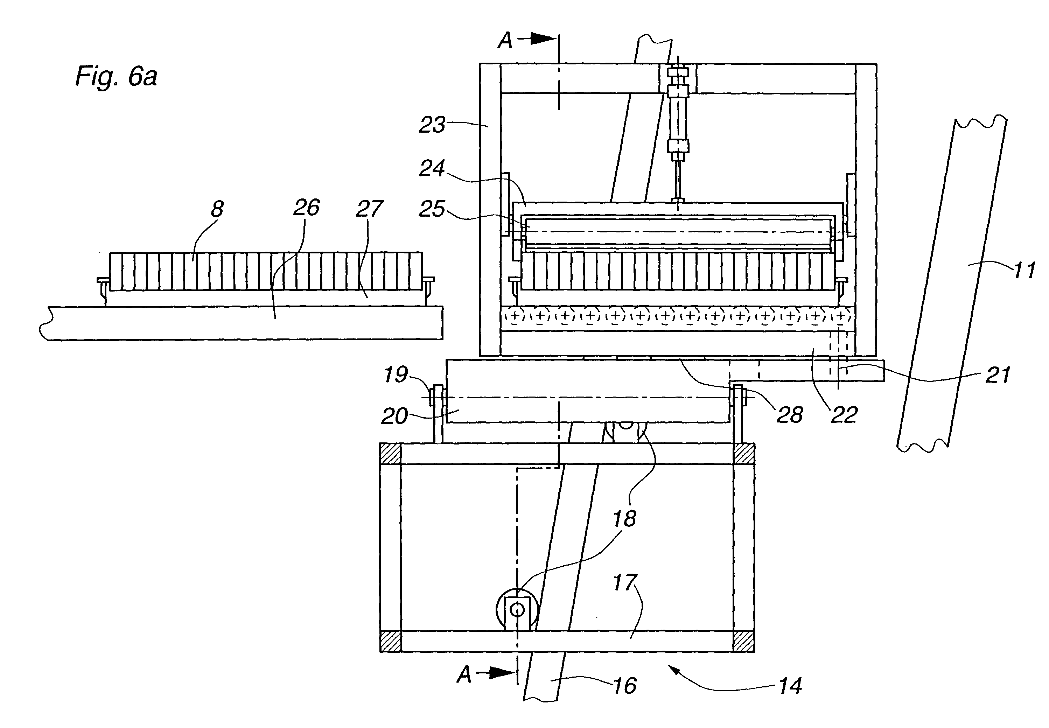

Die Fig. 6 zeigt schematisch eine erfindungsgemäße Beladeeinrichtung für eine Warenausgabeeinrichtung 10, die nebeneinander angeordnete Füllschächte 11 aufweist, die leicht gegen die Vertikale geneigt angeordnet sind und an deren von einem Transportband 12 abgekehrten Seite mit Füllöffnungen versehen sind, die sich im wesentlichen über die gesamte Höhe der Füllschächte 11 erstrecken.

Im unteren Endbereich der Füllschächte 11 sind Auswurfeinrichtungen 13 angeordnet, die zur einzelweisen Ausgabe der in den Füllschächten gestapelten Warenstücke dienen.

Die Beladeeinrichtung weist einen parallel zur Ebene der nebeneinander angeordneten Füllschächte 11 verschiebbaren Support 14 auf, der in nicht dargestellten Schienen geführt ist, die im Aufstandsbereich der Warenausgabeeinrichtung 10 und in dessen Firstbereich verlaufen. Auf diesem Support 14, bzw. dessen Säulen 16, ist ein Schlitten 17 in der Höhe verschiebbar geführt. Dabei ist der Schlitten 17 über antreibbare Rollen oder Ritzeln 18 geführt.

Der Schlitten 17 ist über eine erste Drehachse 19 schwenkbar mit einem Träger 20 verbunden. Dieser Träger 20 ist über eine zweite Drehachse 21 mit einer Abstützung 22 schwenkbar verbunden, die zur Aufnahme bzw. Abstützung eines Magazins 27 gemäß den Fig. 1 bis 5 dient.

Die Abstützung 22 ist mit einem Rahmen 23 verbunden in dem ein Niederhalter 24 geführt ist. Dieser Niederhalter 24 weist federnde Finger 25 auf, die die in einem Magazin 27 gehaltenen Warenstücke 8 gegen den Boden des Magazins 27 drücken und bei der weiteren Manipulation gegen ein Herausfallen sichern.

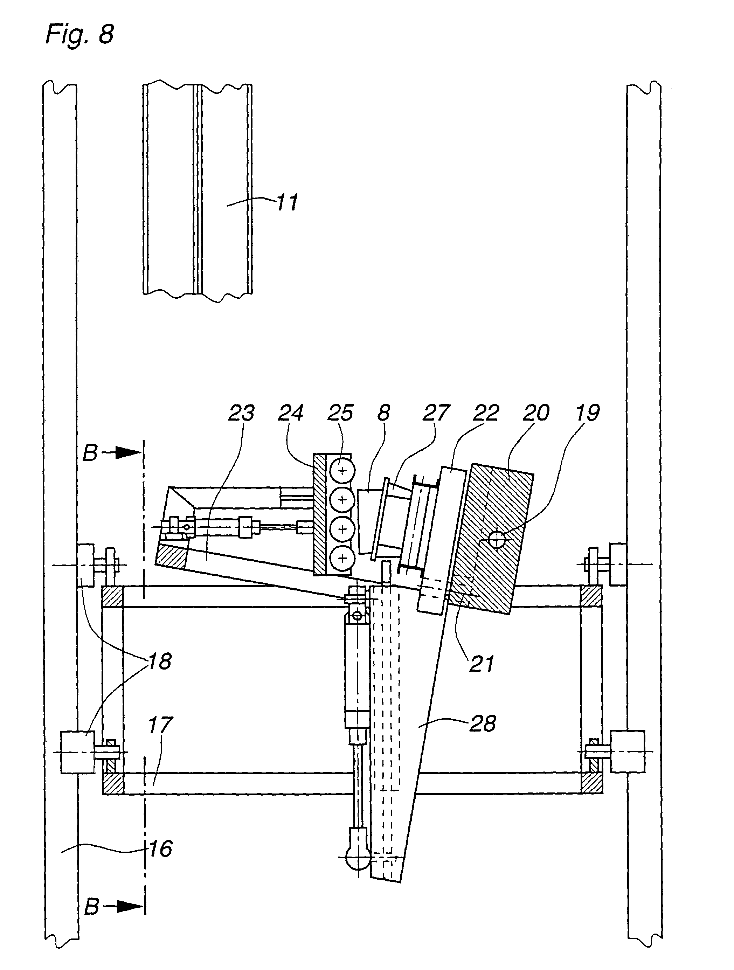

Bei der Beladung der Füllschächte 11 wird ein mit Warenstücken 8 beladenes Magazin 27 über eine Fördereinrichtung 26 der Beladeeinrichtung zugeführt und gelangt dabei auf die Abstützung 22. Nach dem Aufsetzen des Niederhalters 24 wird der Träger 20 um die erste Drehachse 19 geschwenkt. (Fig. 8).

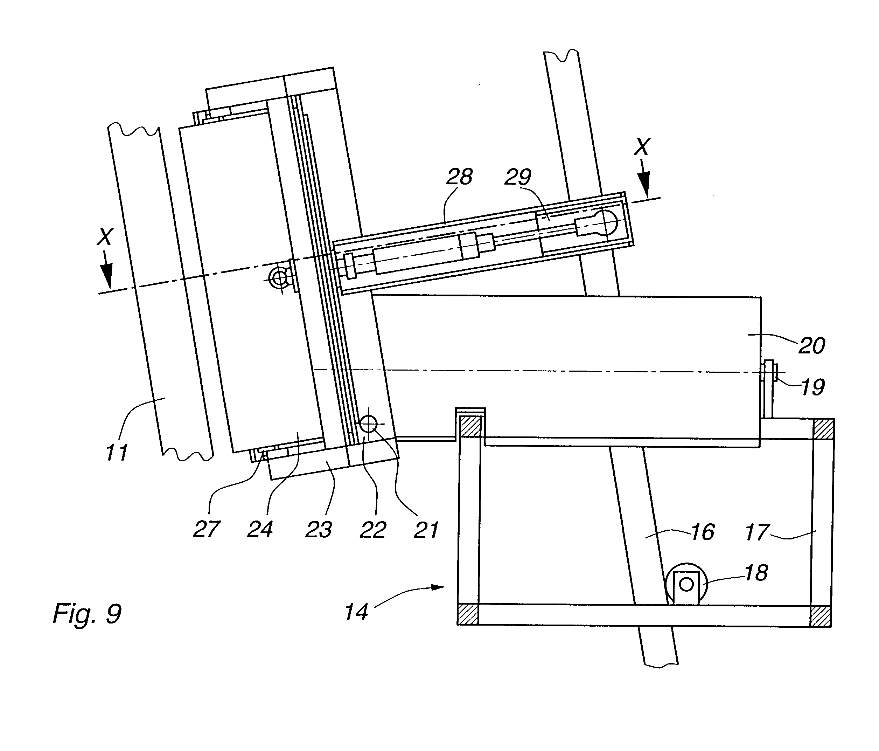

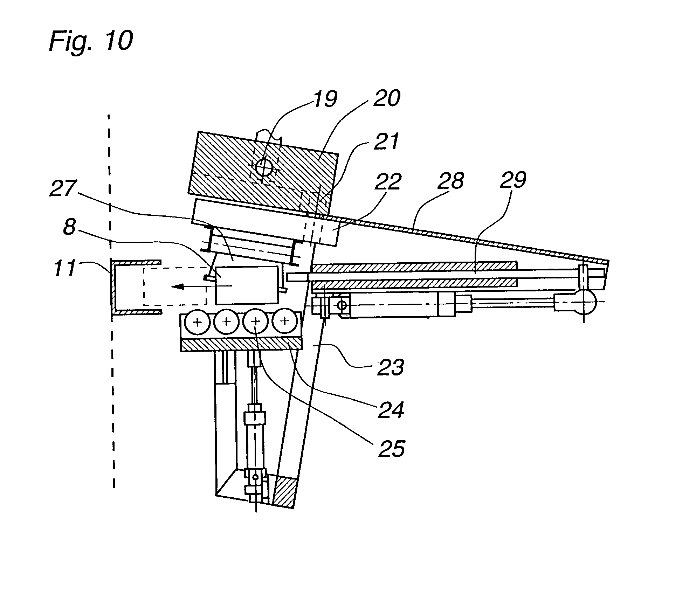

Anschließend wird die Abstützung 22 um die zweite Drehachse 21 gedreht bis der Ausleger 28 der Abstützung 22 im wesentlichen senkrecht zu den Füllschächten 11 steht. (Fig. 9 und 10). Nach der Ausrichtung des Magazins auf einen Füllschacht 11 werden die im Magazin 27 gehaltenen Warenstücke 8 mit einem am Ausleger 28 gehaltenen Ausstoßer 29 in den Füllschacht 11 geschoben.

Durch Zurückdrehen der Abstützung 22 und des Trägers 20 in die Ausgangslage nach der Fig. 6 kann das leere Magazin 27 abgenommen und ein neues in die Beladeeinrichtung eingeschoben werden.

## Patentansprüche

1. Beladeeinrichtung zum Beschicken einer Warenausgabeeinrichtung (10) mit im wesentlichen vertikal verlaufenden, im wesentlichen über sich über die gesamte Höhe erstreckende Füllöffnungen befüllbaren Füllschächten (11) mit Warenstücken (8), die in einem Magazin gestapelt zuführbar sind, **dadurch gekennzeichnet,** daß die Beladeeinrichtung einen verstellbaren, gegenüber einer Abstützung (22) für das Magazin (27) angeordneten Niederhalter (24) aufweist, wobei die Abstützung (22) samt dem Niederhalter (24) an einem Träger (20) gehalten ist, der um eine erste im wesentlichen senkrecht zu den Füllschächten (11) verlaufenden Schwenkachse (19) schwenkbar ist und die Abstützung (22) samt Niederhalter (24) um eine weitere, im wesentlichen senkrecht zur ersten Drehachse (19) verlaufende zweite Drehachse (21) gegenüber dem Träger (20) verschwenkbar ist und ein mit der Abstützung (22) in Verbindung stehender verschiebbarer Ausstoßer (29) vorgesehen ist, der an den im Magazin (27) gehaltenen Warenstücke (8) zur Anlage bringbar und gegen einen Ausstoßbereich des Magazins (27) bewegbar ist.

2. Beladeeinrichtung nach Anspruch 1, **dadurch gekennzeichnet,** daß der Träger (20) mit einem Schlitten (17) über die erste Drehachse (19) verbunden ist, der in einem Support (14) im wesentlichen vertikal verschiebbar ist.

3. Beladeeinrichtung nach Anspruch 2, **dadurch gekennzeichnet,** daß der Support (14) entlang von im obersten und untersten Bereich der Füllschächte (11) angeordneten Schienen in horizontaler Richtung verschiebbar gehalten ist.

4. Beladeeinrichtung nach einem der Ansprüche 1 bis 3, **dadurch gekennzeichnet,** daß das im wesentlichen rechteckige Magazin (27) an lediglich drei Seiten von Seitenwänden (3, 4) begrenzt ist und einen gegen die Aufstandsebene geneigt verlaufenden Boden (1) aufweist, der in Richtung einer Seitenkante parallel zur Aufstandsebene verläuft, wobei die entlang der parallel zur Aufstandsebene verlaufenden tieferliegenden Kante des Bodens (1) verlaufende Seitenwand (4) einen sich im wesentlichen über deren gesamte Länge erstreckenden im wesentlichen rechteckigen Schlitz (5) aufweist, in den ein an einem von der Abstützung (22) abstehenden Ausleger (28) verschiebbar gehaltener Ausstoßer (29) einschiebbar ist.

## Claims

1. A loading device for charging a merchandise output device (10) with substantially vertically extending chargeable filling chutes (11) having filling openings extending substantially over the entire width and with pieces of merchandise (8) which can be supplied stacked in a hopper, characterized in that the loading device is provided with an adjustable holding-down device (24) arranged opposite of a support (22) for the hopper (27), with the support (22) including the holding-down device (24) being held on a carrier (20) which is swivelable about a first swiveling axis (19) extending substantially perpendicular to the filling chutes (11) and the support (22), including the holding-down device (24), is swivelable with respect to the carrier (20) about a second swiveling axis (21) which extends substantially perpendicular to the first swiveling axis (19) and a displaceable ejector (29) is provided which is in connection with the support (22) and which can be brought into contact with the pieces of merchandise (8) held in the hopper (27) and is movable towards an ejection zone of the hopper (27).

2. A loading device as claimed in claim 1, characterized in that the carrier (20) is connected with a carriage (17) by way of the first swiveling axis (19) which carriage (17)is substantially perpendicularly displaceable in a support (14).

3. A loading device as claimed in claim 2, characterized in that the support (14) is held displaceably in the horizontal direction along rails disposed in the uppermost and lowermost region of the filling chutes (11).

4. A loading device as claimed in one of the claims 1 to 3, characterized in that the substantially rectangular hopper (27) is limited merely at three sides of side walls (3, 4), is provided with a floor (1) which extends inclined against the plane of contact surface and in the direction towards a side edge parallel to the plane of the contact surface, with the side wall (4) extending along the lower edge of the floor (1) extending parallel to the plane of contact surface having a substantially rectangular slot (5) extending substantially over its entire length, into which is insertable an ejector (29) which is held displaceably on an extension arm (28) projecting from the support (22).

## Revendications

1. Dispositif de chargement pour charger un dispositif de sortie de marchandises (10) comportant des puits de remplissage (11), qui s'étendent sensiblement verticalement et peuvent- être chargés essentiellement au moyen d'ouvertures de remplissage qui s'étendent sur toute la hauteur, avec des articles de marchandises (8) qui peuvent être envoyés à l'état empilé dans un magasin, caractérisé en ce que le dispositif de chargement possède un dispositif de retenue (24), qui est réglable et est disposé en vis-à-vis d'un appui (22) pour le magasin (27), l'appui (22) étant retenu conjointement avec le dispositif de retenue (24) sur un support (20) qui peut pivoter autour d'un premier axe de pivotement (19) qui est essentiellement perpendiculaire aux puits de remplissage (11), et que l'appui (22) ainsi que le dispositif de retenue (24) peuvent pivoter autour un autre second axe de rotation (21), qui s'étend essentiellement perpendiculairement au premier axe de rotation (19), par rapport au support (20) et qu'il est prévu un éjecteur déplaçable (29) qui est relié à l'appui (22) et peut être appliqué contre les articles de marchandises (8) retenus dans le magasin (27) et est déplaçable vers une zone d'éjection du magasin (27).

2. Dispositif de chargement selon la revendication 1, caractérisé en ce que le support (20) est relié au moyen d'un premier axe de rotation (19) à un chariot (17), qui est déplaçable sensiblement verticalement dans un support (14).

3. Dispositif de chargement selon la revendication 2, caractérisé en ce que le support (14) est retenu de manière à être déplaçable dans une direction horizontale le long de rails disposés dans la partie la plus haute et la partie la plus basse des puits de remplissage (11).

4. Dispositif de chargement selon l'une des revendications 1 à 3, caractérisé en ce que le magasin (27), qui est essentiellement rectangulaire, est limité sur seulement trois côtés par des parois latérales (3, 4) et possède un fond (1), qui s'étend en position inclinée par rapport au plan de support et s'étend en direction d'un bord latéral, en étant parallèle au plan de support, la paroi latérale (4), qui s'étend le long du bord le plus bas, parallèle au plan de support, du fond (1), possédant une fente essentiellement rectangulaire (5) qui s'étend essentiellement sur toute la longueur de la paroi et dans laquelle peut être inséré un éjecteur (29) qui est retenu de manière à être déplaçable sur un bras en console (28), qui fait saillie à partir de l'appui (22).
